# EUROPEAN PATENT SPECIFICATION

(11) **EP 2 721 871 B1**
(45) Date of publication and mention of the grant of the patent: **12.08.2020**
(21) Application number: 12799757.5
(22) Date of filing: 15.06.2012
(51) Int. Cl.: H04W 12/08, H04W 4/33, H04L 29/06, H04W 48/04

(54) **SYSTEM AND METHOD FOR ACCESSING A STRUCTURE USING DIRECTIONAL ANTENNAS AND A WIRELESS TOKEN**
SYSTEM UND VERFAHREN ZUM ZUGREIFEN AUF EINE STRUKTUR MIT RICHTANTENNEN UND EINEM DRAHTLOSEN TOKEN
SYSTÈME ET PROCÉDÉ POUR ACCÉDER À UNE STRUCTURE AU MOYEN D'ANTENNES DIRECTIVES ET D'UN JETON SANS FIL

(30) Priority: 17.06.2011 US 201161498169 P
(43) Date of publication of application: 23.04.2014
(73) Proprietor: Yikes, LLC, Monticello, IN 47960 (US)
(72) Inventor: MCINTYRE, Jim, E., Mooresville, IN 46158 (US); ROBERTSON, Andrew, Joseph, Monticello, IN 47960 (US); ROBERTSON, William, Benjamin, Monticello, IN 47960 (US)
(74) Representative: Tomkinson, Alexandra
(86) International application number: PCT/US2012/042683
(87) International publication number: WO 2012/174387

(56) References cited:
- WO-A1-02/35479
- US-A1- 2010 201 482
- US-A1- 2010 201 482
- US-A1- 2011 001 827
- US-A1- 2011 065 391
- US-A1- 2011 065 391

## Description

### FIELD OF THE INVENTION

The present invention generally relates to an access system including a wireless token and a proximity and location verification device. More particularly, the present invention pertains to a three point access system which includes a wireless token which transmits a request for access which ultimately results in a door being unlocked.

### BACKGROUND OF THE INVENTION

Prior art systems exist for providing access to structures using wireless devices. For example, U.S. Patent Publication 2010/201482 describes such a system. Traditionally, system such as this utilized wireless transmission ranges to establish a zone where the wireless device must be located in order to properly request and be granted access to the structure. However, such system does not provide for any detection of whether the wireless device seeking access is located inside or outside of the structure. To prevent the undesirable situation in which an authorized user, along with the wireless device, is within a structure, and an unlock request is transmitted to the access system, thereby permitting access to the structure, the present disclosure incorporates directional antennas within the system which operate to determine whether or not the wireless device requesting access is within the structure or properly outside of the structure.

The use of directional antennas and received signal strength indicators (RSSI) is not new, for example, see US 2011/065391. However, the unique application to a wireless access system such, such as that references above, to solve the technical problem of inside/outside detection for use in granting access to a structure within an access system has not previously been utilized.

### SUMMARY

The invention is defined in the independent claims. Particular embodiments are set out in the dependent claims.

### BRIEF DESCRIPTION OF THE DRAWINGS

FIG. 1 is a diagrammatic view of an access system according to one implementation of the present invention.
FIG. 2 is a process flow diagram illustrating one set of steps performed in enabling a user to access a structure using the novel access system, including a wireless token.
FIG. 3 is a mock floor plan illustrating the coverage areas of the access node and the two door lock antennas in a typical multi-room hotel setting.

### DETAILED DESCRIPTION

Some of the embodiments described hereinafter are not embodiments of the invention according to the claims.

For the purposes of promoting and understanding of the principles of the invention, reference will now be made to the embodiment illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

Currently, systems exist, such as the Signature RFID/NFC system from VingCard, which provide a user access to a hotel room using their mobile phone. Alternatively, other point-to-point systems exist which provide access to an office, lab, or other secured area using a wireless token, such as an RFID tag or card. However, such systems are limited in that the token is limited to a single identifier which leaves open a crucial security flaw which would allow for duplication of the token's responsive signal. Additionally, given the wireless range of these tokens, an undesirable situation may arise in which the token is within range of the lock or RFID reader when inside of the secured area. This presents the possibility that access may be granted to anyone seeking entry at that time.

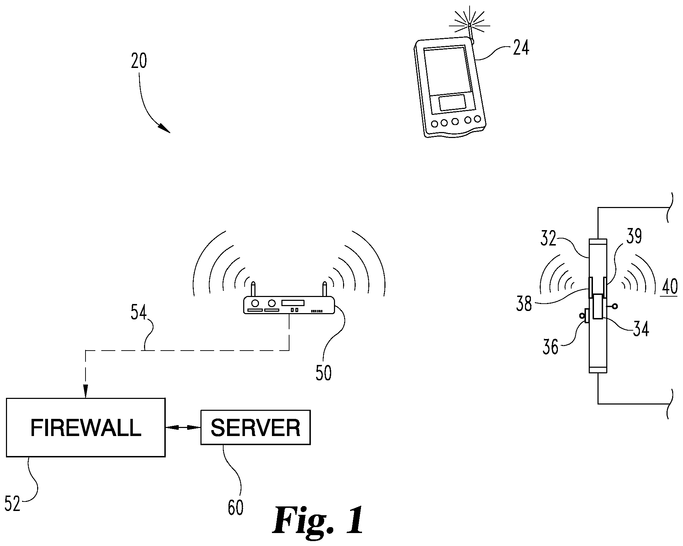

As shown in FIG. 1, one embodiment of an access system 20 advantageously permits a user to access a structure 40 using a wireless token 24. In addition to lodging and workplace access systems, it will be appreciated that similar embodiments of the access system to be described also encompass systems for controlling access to other structures or openings/doors thereof. In particular, the access system 20 is particularly well suited to providing access to structures in which the authorized users are frequently changes, such as a hotel. As such, in the illustrated embodiment, according to FIG. 1, the described system comprises an access system 20 for allowing a hotel guest to access their assigned hotel room 40 using a wireless token 24, which in the preferred form, is an electronic device capable of short range wireless communication, such as a device implementing Bluetooth®, Zigbee®, or some other low-power wireless communication protocol/standard. It shall be understood that many of the descriptions herein are made with respect to a hotel environment and are meant for illustrative purposes and that the concepts herein are generally applicable to a general safety and security access system and are not limited to only a hotel room access system.

Examples of other structures for which the novel access system may be adapted include other rooms within a hotel (i.e. workout rooms, pools, VIP lounges), office buildings, school/university buildings, laboratories, warehouses, and portions thereof, event ticket gates/turnstiles, movie theatres, safety deposit boxes, mailboxes, lockers, or other enclosures for which providing selective user access is desired.

As shown in FIG. 1, according to the illustrative embodiment, the access system 20 includes one or more wireless tokens 24 which allow a user to access their assigned hotel room without a traditional key or card. Illustratively, in some embodiments, the access system 20 includes a data network 54. Data network 54 is preferably a private local area network (LAN) and may comprise the Internet, which is a TCP/IP based global network; however, the user of the term "Internet" herein shall be understood to refer to at least a portion of any public interconnected electronic network which interchanges data by packet-switching.

Access system 20 additionally comprises a mechanical lock 34 for locking and unlocking a structure 40 (partially shown). In the illustrated embodiment, a user gains access to the structure 40 via door 32. In the illustrative embodiment, mechanical lock 34 is a mechanical door lock, which includes a locking mechanism similar to a common entry or exterior lock, but is further capable of self-unlocking in response to an electronic signal, in addition to other functionality described herein. For purposes of non-limiting example, mechanical lock 34 may include a cam lock, rotary latch, electro-mechanical lock, magnetic lock, or the like. According to the preferred form, lock 34 unlocks in response to an electrical signal sent from a wireless token 24 and/or access node 50. In one form, the electrical signal is sent wirelessly, such as over a low-power RF connection, such as a Zigbee® connection. In a further preferred form, the lock 34 returns to a locked state following the passage of a predetermined time period or a user opening and closing the door following the receipt of an unlock signal. In some additional forms, lock 34 or door 40 may also include a mechanical key slot, key card, or other entry permitting authentication means 36 in addition to, or as backup for, that described herein with respect to lock 34. In addition, it shall be appreciated that system 20 may be applied to access restrictions other than locks including, for example, an elevator control system providing limited access, a garage door, or others access barriers, as described later.

Access system 20 also utilizes at least one access node 50 to interface with wireless token 24 and lock 34. Access node 50, as illustrated, is a wireless node implementing a common short-range wireless standard, such as Bluetooth® or ZigBee®, to those implemented by wireless token 24 and lock 34. Access node 50 is also connected to server 60 via firewall 52 and network 54.

In the illustrative form, access system 20 includes a plurality of access nodes, such as access node 50, where each node is strategically positioned near a specified structure (i.e. a hotel room). The access nodes are preferably always in a active mode so that wireless tokens 24 may be connected with them on demand in the event the wireless token 24 is authorized, such as by having an authorized MAC address or some other selected security mechanism. In a further form, the access nodes 50 are not in a discoverable mode and the pairing of the access nodes 50 with wireless token 24 occurs prior to the user's arrival programmatically. Illustratively, in some embodiments, access node 50 is operatively connected to server 60 to process and authenticate electronic unlock requests from wireless tokens 24. Firewall 52 includes at least a hardware or software implemented firewall or other selected security features to prevent external access to server 60 or access node 50.

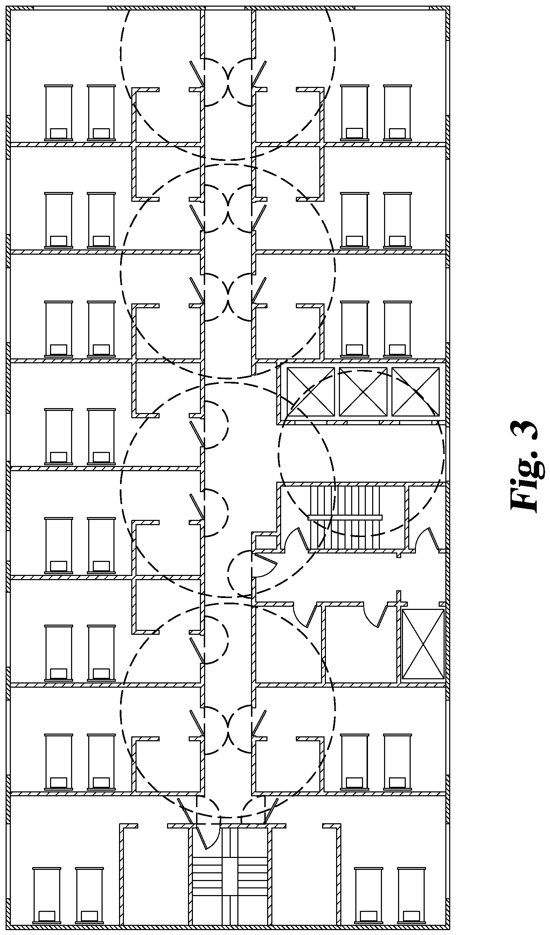

The location information maintained by access node 50 is linked to the present/assigned location of the node and is used in processing any unlock request. For example, an access node on the fourth floor of a hotel in downtown Chicago may be assigned a unique hotel identifier coupled with a hotel zone identifier. Alternatively, the node may be assigned a single identifier which is then linked to its location by the wireless token 24 or server 60. For purposes of illustrating the hierarchical relationship between access nodes 50 and the structures which fall within their range, a mock floor plan is shown in FIG 3. The mock floor plan illustrates a number of complete circles which denote the wireless range of a number of access nodes 50 for purposes of covering the entryway/hallway of a hotel floor and one or more doors.

According to the illustrated embodiment, server 60 operates in conjunction with access node 50 over internal network 54 to authenticate any wireless token 24 which comes within its range. In one form, when a wireless token 24 comes within range of an access node 50, the access node 50 receives information from the wireless token 24 and seeks to identify one or more structures within its coverage area to which the wireless token 24 is authorized to enter. The server 60 serves to authenticate the request or a portion thereof using a reservations and occupancy database, while in other forms, the access node 50 may perform at least a portion of the authentication. In the illustrative embodiment, server 60 processes each request corresponding to an authentication request received by access node 50 from wireless token 24, and upon proper authentication, confirms the authentication for one or more structures to access node 50 which then transmits an electronic signal to the corresponding lock(s), such as lock 34, notifying the lock to wake-up for a predetermined period of time in order to communication with nearby authorized wireless token 24. In a further form, the access node 50 not only notifies lock 34 that it should wake-up, but also communicates information to lock 34 regarding which wireless token 24 it should be expecting.

While server 60 is described and illustrated as being a server, it should be understood that server 60 may be any computer, including a client server arrangement. Server 60 may interface with access node 50 by either a wireless or hardwired interconnection. Preferably, the connection is a secured connection. A non-limiting example list of potential interfaces includes IR, optical, RF, serial port, IP network, and USB. Additionally, the functions of server 60 and access node 50 may be integrated into one computer system.

Once access node 50 as authenticated wireless token 24 and woken-up a selected lock 34, the process proceeds to a second level authentication between the wireless token 24 and lock 34. In the illustrated embodiment, wireless token 24 connects to lock 34 and provides authorization information. In one form, the authorization information provided may be the same as the authorization information provided by wireless token 24 to access node 50, described above. Alternatively, in another form, the authorization information provided by wireless node 24 may be unlock information provided to wireless node 24 by access node 50 earlier in the process. Furthermore, in this form as well as other, upon receiving the authorization information from wireless token 24, lock 34 may communicate with access node 50 to confirm the authorization or wireless token 24. In the event the authorization information received by lock 34 is authorized, by whatever means selected, lock 34 determines that a legitimate unlock request is present.

Additionally, either prior to or simultaneous with, lock 34 assesses the location of wireless token 24 to determine whether it is within a designated area. For making this determination, lock 34 includes two directional antennas 38 and 39 which are operable to communicate with wireless token 24 over a low power wireless transmission protocol. As illustrated in FIG. 1, according to the illustrated form, lock 34 and antennas 38 and 39 are located within the mortise of door 32. According to the described form, antenna 38 faces outward from door 32 and structure 40 while antenna 39 faces inward from door 32 and into structure 40. These antennas enable lock 34 to determine an approximate location of wireless token 24 with respect to door 32 (i.e. inside or outside of structure 40) based upon a received signal strength indication (RSSI) determined by each of directional antennas 38 and 39. Furthermore, lock 34 can confirm that the requesting user device is within a designated area, such as an 2 foot semi-circular area on the outside of a door, based upon the signal strength received as well as the differential of the signal strength between the two opposite facing directional antennas. Such a confirmation ensures that access to a structure won't ever be improperly granted based upon a user device within the structure. For example, the mock floor plan shown in FIG. 3 illustrates a number of desired areas as small half circles outside of hotel room doors, which area the effective coverage areas for the required signal strength to be detected by antenna 38 with respect to wireless token 24. It is only when a wireless token 24 is within these areas that their respective doors may be opened if authorized. Furthermore, a number of larger half circles in the interior of the hotel rooms show the field of coverage of antennas 39 which are used to detect when wireless token is within the corresponding hotel room.

Only after the authentication information received from wireless token 24 is verified and the location of wireless token 24 has been determined to be in the designated area will lock 34 unlock to permit the user access to the structure.

In still other embodiments, lock 34 is operably coupled to an override switch (not shown) having an access disable state. Asserting the override switch prevents the access system 20 from permitting access to corresponding structure 40. As one non-limiting example, the override switch may be asserted when a guest engages a deadbolt or bar latch within their hotel room. In some embodiments of the access system 20, the override switch is incorporated into an electronic control, not shown here, accessible to the user within structure 40.

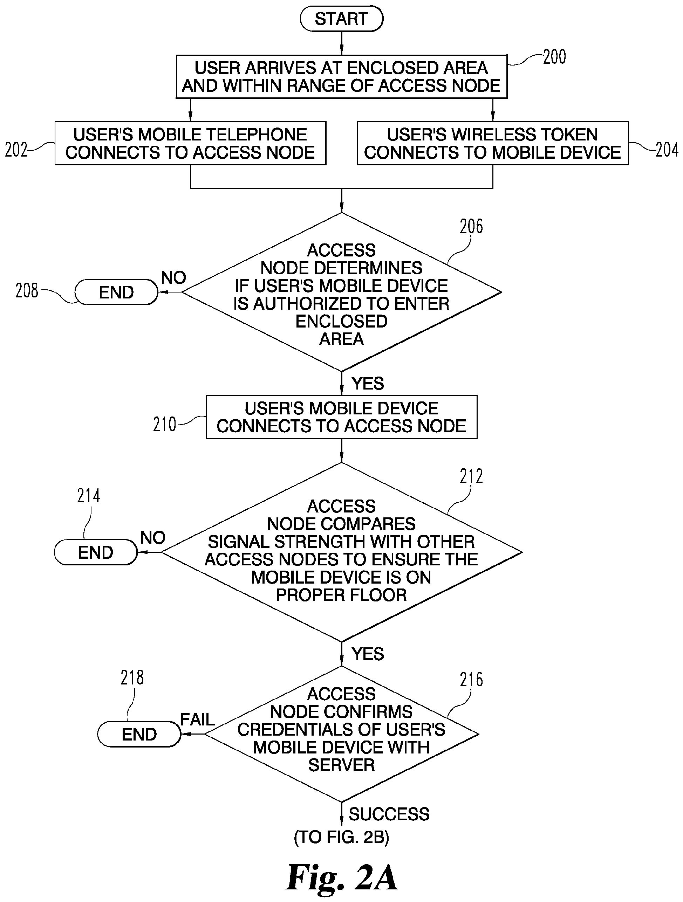

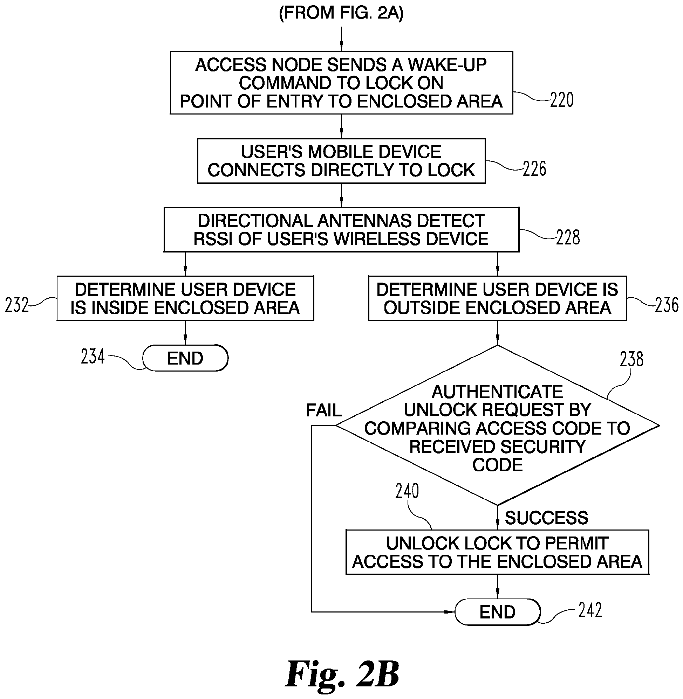

A flowchart illustrating one set of steps performed in configuring a wireless token 24 for use in accessing a structure 40 according to one embodiment of the present invention is shown in FIG. 2. The process involves a wireless token 24 and the various other components of access system 20. The following description is with continuing reference to access system 20 of FIG. 1. As shown in FIG. 1, the wireless token 24 may be a dedicated wireless token or another device, such as a mobile telephone, laptop, tablet, or other portable electronic device; however, it is understood that numerous other networked appliances are also intended.

It shall be appreciated that initial reservation, check-in, and configuration information must be populated within server 60 to enable to access methods described herein to be performed. For example, confirmation information stored by server 60 preferably identifies the hotel and the user and includes a check-in/check-out date along with details of the type of room requested/reserved. In the preferred form, this confirmation information is received by server 60 as a result of a hotel booking being made for a user either online, in person, or over the phone.

Upon checking into the hotel, or being authorized to access some other structure in other adaptations of the system 20, the wireless token 24 is automatically configured to pair with or otherwise connect to access nodes located near the structure 40. Additionally, the details of the assigned room or structure, including its number and location, are then stored by server 60 is association with wireless token 24. This ensures that access nodes 50 will proper identify the room wireless token 24 is assigned to access and be able to authenticate its request for access. It shall be appreciated that this process may be modified to accommodate more than one authorized hotel guest per room, such as having two wireless devices authorized to enter the same hotel room, or allowing a current guest to authorize the wireless device of another to access the hotel room for any portion of their remaining stay.

In continuing the description of the embodiment described with respect to FIG. 2, a flowchart illustrating one set of steps performed in allowing a user to access structure 40 using wireless token 24 and the various other components of access system 20 is shown. The following description is with continuing reference to access system 20 of FIG. 1

As shown in FIG. 2, the process begins at start point 200 with the user along with the wireless token 24 arriving in a location within range of an access node 50. In step 202 or 204, a user device, such as either a mobile telephone or wireless token 24, are detected by the access node 50 respectively. Upon detecting the user device, the access node determines whether or not the user is authorized to enter one of the structure entrances that is proximate to access node 50 (step 206). If the user is not authorized, the process ends at point 208. If the user is authorized, the user device connects to the access node 50 (step 210). Next, in order to ensure that the user is on the proper floor, the access node 50 compares its perceived signal strength from the nearest access nodes of the floor above and below (if available) to ensure that its signal is the strongest (step 212). If the user is determined to be on another floor, the process proceeds to and ends at step 214. Alternatively, if the access node 50 determines that the user is on its associated floor, the process proceeds to step 216. In step 216 the access node 50 collaborates with server 60 to confirm the credentials provided by the user device. In the event the credentials are not confirmed, the process ends at step 218. If the credentials of the user device are confirmed, the process proceeds to step 220 where access node 50 sends a wake-up signal to the lock, such as lock 34, associated with the structure, such as structure 40, to which the user is authorized. Additionally, the access node 50 may detect the type of wireless standard the user device is capable of such that the proper wireless standard may be activated by the selected door lock 34 in step 220. The wake-up signal may also include an access code, such as a temporary alphanumeric code or the like, which must be matched by the user device in order to cause the lock to open.

The second stage of the process beings in step 226 where the user device connects to the now active lock 34. The dual antennas 38 and 39 of lock 34 detect a RSSI from the user device (step 228). In the preferred form, the central focus of the antennas 38 and 39 are directly opposite of one another. However, in an alternate form, the central focus of the antennas 38 and 39 may only be offset by at least 130 degrees. In yet another form, the central focus may differ by 150 degrees or more. If the user device is determined to be inside of the structure, such as by having a stronger signal strength via the internally facing antenna 39, the process proceeds through steps 232, and 234, whereby it is determined that the user is already in the room and the process ends subject to starting over. Alternatively, if is determined to be outside of the structure, such as by having a stronger signal strength via the externally facing antenna 38 or a suitable ration, and at least a certain signal strength to indicate the desired proximity to lock 34 (step 236), the process proceeds to authenticate the request by comparing the security code provided by the user device to the stored access code received from node 50 (step 238) until lock 34 unlocks either provides the user with access to structure 40 (step 240) upon a successful authentication or the process ends at point 242.

In a further form, door lock 34 takes appropriate samples of RSSI relative to wireless token 24 on either side of door, using antennas 38 and 39. For example, the samples may include several periodic RSSI readings which are then averaged or otherwise combine to reduce interference, noise, or the like from a single reading. Based upon these readings, lock 34 makes a determination of whether wireless token 24 is inside and outside of door 32. Additionally, the lock 34 may use the RSSI samples of antenna 38 to determine the distance wireless token 24 is from lock 34 for purposes of determining its presence within the defined proximity range outside of the door 32 as well. Once measurements averages are conducted, and presence of token/device and it is determined that he is in the proper unlock zone (range of outside proximity), the unlock of step 242 is granted.

In yet another form, lock 34 may periodically transmit information to access node 50 for passing along to server 60 which indicates the user is still in the hotel room. This information may trigger the in-room temperature to be maintained, and upon detecting that the user is no longer in the room, the temperature may be raised to a user-specified or standard level or it may trigger the lights to be turned off, as described in U.S. Patent Application 10/126,486 to Sunyich entitled "Personalized Smart Room", which is hereby incorporated by reference to the extent not inconsistent.

While the invention has been illustrated and described in detail in the drawings and foregoing description with respect to a hotel access system, the same is to be considered as illustrative and not restrictive in character. By way of non-limiting example, the system described herein may be applied to other enclosed areas where selective access is desired, including, other structures such as offices, amusement parks, military bases, restricted areas, vehicles, homes, etc.

## Claims

1. An access system (20) allowing a user to access an enclosed area (40) using a wireless user device (24), the access system (20) comprising:
a database adapted to store access permissions identifying at least one wireless user device authorized to access said enclosed area (40);
a mechanical locking device (34) adapted to secure a point of entry (32) to said enclosed area (40), said mechanical locking device (34) operably connected to at least one short-range wireless receiver suitable for receiving an unlock request from said wireless user device (24) of the user and subsequently responding by granting access through said point of entry (32) when said unlock request is authorized using said database, **characterized in that**
wherein said at least one short-range wireless receiver includes a first and second directional antenna (38, 39), which are mounted to said point of entry (32), oriented such that the centers of the fields of reception of said first and second directional antennas are offset by an angle of at least 130 degrees, and configured to determine a received signal strength indicator for said wireless user device (24) of the user; and
wherein said authorizing the unlock request requires a comparison of the received signal strength indicator for said wireless user device (24) of the user for each of said first and second directional antenna (38,39) such that the ratio of the received signal strength indicators indicates that said wireless user device (24) is outside of the enclosed area (40).

2. The access system according to claim 1, wherein said at least one short-range wireless radio is a Bluetooth radio.

3. The access system according to claim 1, wherein the centers of the fields of reception of said first and said second directional antennas (38, 39) are offset by an angle of at least 150 degrees.

4. The access system according to claim 1, wherein said enclosed area (40) is a structure and (40) said point of entry is a door (32).

5. The access system according to claim 4, wherein said mechanical locking device (34) is located in the mortise of said door (32).

6. The access system according to claim 4, wherein at least one of said first and said second directional antennas (38, 39) is located in the mortise of said door (32).

7. The access system according to claim 4, wherein said structure (40) is a hotel room.

8. The access system according to claim 1, wherein said wireless user device (24) is a mobile telephone.

9. A method of using an access system for granting access to an enclosed area to a user using a wireless user device (24), the method comprising the steps of:
maintaining a database storing access permissions identifying at least one wireless user device (24); of the user authorized to access one or more enclosed areas (40);
receiving a first unlock request for an identified enclosed area (40) at an access node (50) from the wireless user device (24) of the user, wherein at least one point of entry (32) of said enclosed area (40) is within the transmission range of said access node (50);
authenticating at least a portion of said first unlock request using said database;
transmitting a wake-up request and an access code from said access node to a short range wireless receiver operably connected to said mechanical locking device (34) securing a point of entry (32) to said identified enclosed area (40);
receiving a second unlock request at said short range wireless receiver from the wireless user device (24) of the user, wherein said second unlock request includes a security code; and
unlocking said mechanical lock device to provide access to said enclosed area in the event that said security code matches said access code, **characterized in that** the method further includes the steps of:
determining a received signal strength indicator for said wireless user device for each of a first and second directional antenna (38, 39) mounted to said point of entry (32) and orientated such that the centers of the fields of reception of said first and said second directional antennas (38, 39) are offset by an angle of at least 130 degrees; and
wherein said unlocking requires the step of comparing the received signal strength indicators for said wireless user device for each of said first and second directional antenna such that the ratio of the received (38, 39) signal strength indicators indicates that said wireless user device (24) of the user is outside of said enclosed area (40).

10. The method for granting access according to claim 9, wherein the centers of the fields of reception of said first and said second directional antennas (38, 39) are offset by an angle of at least 150 degrees.

11. The method for granting access according to claim 9, wherein said enclosed area (40) is a structure and said point of entry is a door (32).

12. The method for granting access according to claim 11, wherein said mechanical locking device (34) is located in the mortise of said door (32).

13. The method for granting access according to claim 12, wherein at least one of said first and said second directional antennas (38, 39) is located in the mortise of said door (32).

## Patentansprüche

1. Zugangssystem (20), das einem Benutzer unter Verwendung einer kabellosen Benutzervorrichtung (24) Zugang zu einem geschlossenen Bereich (40) gewährt, wobei das Zugangssystem (20) Folgendes aufweist:
eine Datenbank, die zum Speichern von Zugangsberechtigungen geeignet ist, die wenigstens eine kabellose Benutzervorrichtung bezeichnen, die zu Zugang zu dem genannten geschlossenen Bereich (40) berechtigt ist;
eine mechanische Schließvorrichtung (34), die zum Sichern eines Eingangspunkts (32) zu dem genannten geschlossenen Bereich (40) geeignet ist, wobei die genannte mechanische Schließvorrichtung (34) funktionell mit wenigstens einem kabellosen Nahbereichsempfänger verbunden ist, der geeignet ist zum Empfangen einer Entsicherungsanforderung von der genannten kabellosen Benutzervorrichtung (24) des Benutzers und zum anschließenden Antworten durch Gewähren von Zugang durch den genannten Eingangspunkt (32), wenn die genannte Entsicherungsanforderung unter Verwendung der genannten Datenbank authentifiziert wird, **dadurch gekennzeichnet, dass**
der genannte wenigstens eine kabellose Nahbereichsempfänger eine erste und eine zweite Richtantenne (38, 39) hat, die am genannten Eingangspunkt (32) montiert sind, so ausgerichtet sind, dass die Mitten der Empfangsbereiche der genannten ersten und zweiten Richtantenne um einen Winkel von wenigstens 130 Grad versetzt sind, und zum Bestimmen eines Empfangsfeldstärke-Indikators für die genannte kabellose Benutzervorrichtung (24) des Benutzers konfiguriert sind; und
das genannte Authentifizieren der Entsicherungsanforderung einen Vergleich des Empfangsfeldstärke-Indikators für die genannte kabellose Benutzervorrichtung (24) des Benutzers für jede der genannten ersten und zweiten Richtantenne (38, 39) erfordert, so dass das Verhältnis der Empfangsfeldstärke-Indikatoren anzeigt, dass sich die genannte kabellose Benutzervorrichtung (24) außerhalb des geschlossenen Bereichs (40) befindet.

2. Zugangssystem nach Anspruch 1, wobei das genannte wenigstens eine Nahbereichsfunkgerät ein Bluetooth-Funkgerät ist.

3. Zugangssystem nach Anspruch 1, wobei die Mitten der Empfangsbereiche der genannten ersten und der genannten zweiten Richtantenne (38, 39) um einen Winkel von wenigstens 150 Grad versetzt sind.

4. Zugangssystem nach Anspruch 1, wobei der genannte geschlossene Bereich (40) eine Konstruktion (40) ist und der genannte Eingangspunkt eine Tür (32) ist.

5. Zugangssystem nach Anspruch 4, wobei die genannte mechanische Schließvorrichtung (34) sich in der Schlossaussparung der genannten Tür (32) befindet.

6. Zugangssystem nach Anspruch 4, wobei wenigstens eine von der genannten ersten und der genannten zweiten Richtantenne (38, 39) sich in der Schlossaussparung der genannten Tür (32) befindet.

7. Zugangssystem nach Anspruch 4, wobei die genannte Konstruktion (40) ein Hotelzimmer ist.

8. Zugangssystem nach Anspruch 1, wobei die genannte kabellose Benutzervorrichtung (24) ein Mobiltelefon ist.

9. Verfahren zur Verwendung eines Zugangssystems, um einem Benutzer unter Verwendung einer kabellosen Benutzervorrichtung (24) Zugang zu einem geschlossenen Bereich zu gewähren, wobei das Verfahren die folgenden Schritte aufweist:
Verwalten einer Datenbank, die Zugangsberechtigungen speichert, die wenigstens eine kabellose Benutzervorrichtung (24) des Benutzers bezeichnen, die zu Zugang zu ein oder mehr geschlossenen Bereichen (40) berechtigt ist;
Empfangen einer ersten Entsicherungsanforderung für einen bezeichneten geschlossenen Bereich (40) an einem Zugangsknoten (50) von der kabellosen Benutzervorrichtung (24) des Benutzers, wobei wenigstens ein Eingangspunkt (32) des genannten geschlossenen Bereichs (40) sich innerhalb der Sendereichweite des genannten Zugangsknotens (50) befindet;
Authentifizieren wenigstens eines Teils der genannten ersten Entsicherungsanforderung unter Verwendung der genannten Datenbank,
Senden einer Weckanforderung und eines Zugangscodes von dem genannten Zugangsknoten an einen kabellosen Nahbereichsempfänger, der funktionell mit der genannten mechanischen Schließvorrichtung (34) verbunden ist, die einen Eingangspunkt (32) zu dem genannten gekennzeichneten geschlossenen Bereich (40) sichert;
Empfangen einer zweiten Entsicherungsanforderung an dem genannten kabellosen Nahbereichsempfänger von der kabellosen Benutzervorrichtung (24) des Benutzers, wobei die genannte zweite Entsicherungsanforderung einen Sicherheitscode beinhaltet; und
Entsichern der genannten mechanischen Schließvorrichtung, um Zugang zu dem genannten geschlossenen Bereich zu gewähren, falls dieser genannte Sicherheitscode mit dem genannten Zugangscode übereinstimmt, **dadurch gekennzeichnet, dass** das Verfahren ferner die folgenden Schritte enthält:
Bestimmen eines Empfangsfeldstärke-Indikators für die genannte kabellose Benutzervorrichtung für jede einer ersten und einer zweiten Richtantenne (38, 39), die an dem genannten Eingangspunkt (32) montiert sind und so ausgerichtet sind, dass die Mitten der Empfangsbereiche der genannten ersten und der genannten zweiten Richtantenne (38, 39) um einen Winkel von wenigstens 130 Grad versetzt sind; und
wobei das genannte Entsichern den Schritt des Vergleichens der Empfangsfeldstärke-Indikatoren für die genannte kabellose Benutzervorrichtung für jede der genannten ersten und zweiten Richtantenne (38, 39) erfordert, so dass das Verhältnis der Empfangsfeldstärke-Indikatoren anzeigt, dass sich die genannte kabellose Benutzervorrichtung (24) des Benutzers außerhalb des geschlossenen Bereichs (40) befindet.

10. Verfahren zum Gewähren von Zugang nach Anspruch 9, wobei die Mitten der Empfangsbereiche der genannten ersten und der genannten zweiten Richtantenne (38, 39) um einen Winkel von wenigstens 150 Grad versetzt sind.

11. Verfahren zum Gewähren von Zugang nach Anspruch 9, wobei der genannte geschlossene Bereich (40) eine Konstruktion ist und der genannte Eingangspunkt eine Tür (32) ist.

12. Verfahren zum Gewähren von Zugang nach Anspruch 11, wobei die genannte mechanische Schließvorrichtung (34) sich in der Schlossaussparung der genannten Tür (32) befindet.

13. Verfahren zum Gewähren von Zugang nach Anspruch 12, wobei wenigstens eine von der genannten ersten und der genannten zweiten Richtantenne (38, 39) sich in der Schlossaussparung der genannten Tür (32) befindet.

## Revendications

1. Système d'accès (20) permettant à un utilisateur d'accéder à une zone fermée (40) au moyen d'un dispositif utilisateur sans fil (24), le système d'accès (20) comprenant :
une base de données conçue pour stocker des permissions d'accès identifiant au moins un dispositif utilisateur sans fil autorisé à accéder à ladite zone fermée (40) ;
un dispositif de verrouillage mécanique (34) conçu pour sécuriser un point d'entrée (32) à ladite zone fermée (40), ledit dispositif de verrouillage mécanique (34) étant connecté de manière opérationnelle à au moins un récepteur sans fil à courte portée convenant à la réception d'une demande de déverrouillage provenant dudit dispositif utilisateur sans fil (24) de l'utilisateur et ultérieurement à une réaction en accordant un accès à travers ledit point d'entrée (32) lorsque ladite demande de déverrouillage est autorisée grâce à l'utilisation de ladite base de données,
**caractérisé en ce que**
ledit au moins un récepteur sans fil à courte portée inclut une première et deuxième antennes directionnelles (38, 39), qui sont montées sur ledit point d'entrée (32), orientées de telle sorte que les centres des champs de réception desdites première et deuxième antennes directionnelles soient décalés suivant un angle d'au moins 130 degrés, et configurées pour déterminer un indicateur d'intensité de signal reçu pour ledit dispositif utilisateur sans fil (24) de l'utilisateur ; et
dans lequel ladite autorisation de la demande de déverrouillage exige une comparaison de l'indicateur d'intensité de signal reçu pour ledit dispositif utilisateur sans fil (24) de l'utilisateur pour chacune desdites première et deuxième antennes directionnelles (38, 39) de telle sorte que le rapport des indicateurs d'intensité de signal reçu indique que ledit dispositif utilisateur sans fil (24) se situe en dehors de la zone fermée (40).

2. Système d'accès selon la revendication 1, dans lequel ladite au moins une radio sans fil à courte portée est une radio Bluetooth.

3. Système d'accès selon la revendication 1, dans lequel les centres des champs de réception desdites première et deuxième antennes directionnelles (38, 39) sont décalés suivant un angle d'au moins 150 degrés.

4. Système d'accès selon la revendication 1, dans lequel ladite zone fermée (40) est une structure et (40) ledit point d'entrée est une porte (32).

5. Système d'accès selon la revendication 4, dans lequel ledit dispositif de verrouillage mécanique (34) est situé dans la mortaise de ladite porte (32).

6. Système d'accès selon la revendication 4, dans lequel au moins une desdites première et deuxième antennes directionnelles (38, 39) est située dans la mortaise de ladite porte (32).

7. Système d'accès selon la revendication 4, dans lequel ladite structure (40) est une chambre d'hôtel.

8. Système d'accès selon la revendication 1, dans lequel ledit dispositif utilisateur sans fil (24) est un téléphone mobile.

9. Procédé d'utilisation d'un système d'accès pour accorder un accès à une zone fermée à un utilisateur au moyen d'un dispositif utilisateur sans fil (24), le procédé comprenant les étapes :
de tenue d'une base de données stockant des permissions d'accès qui identifient au moins un dispositif utilisateur sans fil (24) de l'utilisateur autorisé à accéder à une ou plusieurs zones fermées (40) ;
de réception d'une première demande de déverrouillage pour une zone fermée identifiée (40) au niveau d'un nœud d'accès (50) en provenance du dispositif utilisateur sans fil (24) de l'utilisateur, dans lequel au moins un point d'entrée (32) de ladite zone fermée (40) se situe dans les limites de la portée de transmission dudit nœud d'accès (50) ;
d'authentification d'au moins une portion de ladite première demande de déverrouillage grâce à l'utilisation de ladite base de données ;
de transmission d'une demande de réveil et d'un code d'accès à partir dudit nœud d'accès jusqu'à un récepteur sans fil à courte portée connecté de manière opérationnelle audit dispositif de verrouillage mécanique (34) sécurisant un point d'entrée (32) à ladite zone fermée identifiée (40) ;
de réception d'une deuxième demande de déverrouillage au niveau dudit récepteur sans fil à courte portée en provenance du dispositif utilisateur sans fil (24) de l'utilisateur, ladite deuxième demande de déverrouillage incluant un code de sécurité ; et
de déverrouillage dudit dispositif à serrure mécanique afin de fournir un accès à ladite zone fermée dans le cas où ledit code de sécurité concorde avec ledit code d'accès, **caractérisé en ce que** le procédé inclut en outre les étapes :
de détermination d'un indicateur d'intensité de signal reçu pour ledit dispositif utilisateur sans fil pour chaque antenne parmi une première et deuxième antennes directionnelles (38, 39) montées sur ledit point d'entrée (32) et orientées de telle sorte que les centres des champs de réception desdites première et deuxième antennes directionnelles (38, 39) soient décalés suivant un angle d'au moins 130 degrés ; et
dans lequel ledit déverrouillage exige l'étape de comparaison des indicateurs d'intensité de signal reçu pour ledit dispositif utilisateur sans fil pour chacune desdites première et deuxième antennes directionnelles de telle sorte que le rapport des indicateurs d'intensité de signal reçu (38, 39) indique que ledit dispositif utilisateur sans (24) de l'utilisateur se situe en dehors de ladite zone fermée (40).

10. Procédé pour accorder un accès selon la revendication 9, dans lequel les centres des champs de réception desdites première et deuxième antennes directionnelles (38, 39) sont décalés suivant un angle d'au moins 150 degrés.

11. Procédé pour accorder un accès selon la revendication 9, dans lequel ladite zone fermée (40) est une structure et ledit point d'entrée est une porte (32).

12. Procédé pour accorder un accès selon la revendication 11, dans lequel ledit dispositif de verrouillage mécanique (34) est situé dans la mortaise de ladite porte (32).

13. Procédé pour accorder un accès selon la revendication 12, dans lequel au moins une desdites première et deuxième antennes directionnelles (38, 39) est située dans la mortaise de ladite porte (32).
